# EUROPEAN PATENT APPLICATION

(11) **EP 1 123 765 A1**
(43) Date of publication of application: **16.08.2001**
(21) Application number: 01300878.4
(22) Date of filing: 31.01.2001
(51) Int. Cl.: B23B 27/04

(54) **Cut-off insert**

(30) Priority: 31.01.2000 JP 2000022639
(71) Applicant: NGK SPARK PLUG CO., LTD, Mizuho-ku Nagoya-shi Aichi (JP)
(72) Inventor: Inayama, Takashi, Mizuho-ku, Nagoya, Aichi (JP)
(74) Representative: Nicholls, Michael John

(57) **Abstract**

A cut-off insert (1) used for cutting-off a piece from a work, comprising an end-cutting face (17); at least two flat rake faces (16) running approximately in parallel and forming at least two straight end-cutting edges (15) with the end-cutting face (17); a recessed end-cutting edge (25) formed between the straight end-cutting edges (15); a sloped breaker wall (18) extended and sloping from the flat rake faces (16) to a clamp-pressing face (29) of the cut-off insert (1); and a recessed rake face having a groove (26) extending from the recessed end-cutting edge (25) toward a clamp-pressing face (29) and formed between the flat rake faces (16). Also disclosed is a cut-off insert (1) having a parallelogram-shaped base portion (14) forming two corners (12) with an acute angle, each corner comprising, an end-cutting face (17); at least two flat rake faces (16) running approximately in parallel and forming at least two straight end-cutting edges (15) with the end-cutting face (17); a recessed end-cutting edge (25) formed between the straight end-cutting edges (15); a sloped breaker wall (18) extended and sloping from the flat rake faces (16) to a clamp-pressing face (29) of the cut-off insert (1); and a recessed rake face having a groove (26) extending from the recessed end-cutting edge (25) toward a clamp-pressing face (29) and formed between the flat rake faces.

## Description

The present invention relates to a cut-off insert or a throwaway insert that is used for cutting-off a piece from a work and/or for forming a groove in the work by lathe-turning.

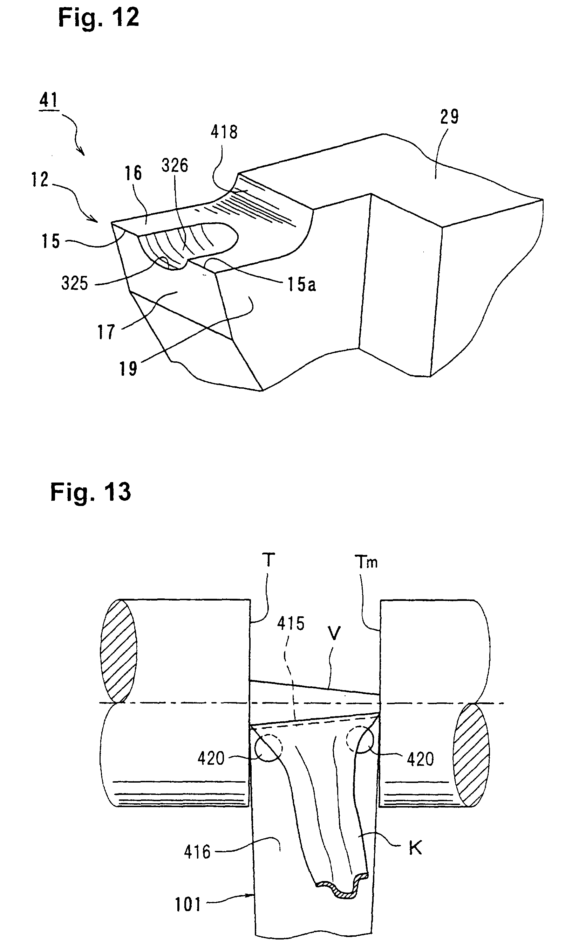

An insert 101, partly shown in Fig. 13 of the accompanying drawings, has been known as a cut-off insert that is used for cutting-off a piece from a work or making a groove in the work (hereinafter also referred to as "cutting-off working"). This conventional insert 101 has a pair of bumps (or inclined bumps) 420 formed in a cutting rake face 416 and formed near a straight end-cutting edge 415 (or 0.2-2 mm away from the end-cutting edge 415) and close to lateral taper-back sides of the insert. When forming a groove or recess by turning the work in a lathe using the insert 101, a ribbon-like chip (K) that is sliced by the end-cutting edge 415 is discharged and pressed against the bumps 20 to deform into a corrugated ribbon shortened in width.

Since the chip (K) is forcibly deformed by the bumps 20 of the insert 101, rigidity of the chip increases and the chip becomes fragile. Therefore, the chip breaks by itself into ribbons with proper lengths without twining around a cutting tool holder holding the insert, or a chuck holding the work.

However, because of the presence of the bumps 420 for deforming the chip, not only a cutting resistance at the insert 101 but also pressure applied to the work are increased. As a result, the end-cutting edge 415 of the insert 101 tends to wear faster and the tool life thereof becomes shorter, compared to an insert without such bumps 420.

In addition, such increased cutting resistance causes the following problem in cutting-off working. Immediately before the work is cut off with the insert 101 in which the end-cutting edge 415 has a lead angle, as shown in Fig. 13, the cutting-off portion (V) of the work assumes a tapered shape and then is broken as the end-cutting edge 415 is fed further. At this cutting-off operation, the portion (V) gradually becomes smaller in diameter and then a work piece is broken off, leaving a central boss or burr in the center of the cut-off piece end because of pressure applied to the portion (V).

Therefore, in the case of manufacturing a precision shaft piece with its end surface required to be accurate or smooth, the central boss or burr left on the shaft end (T) must be removed later by a secondary working step, although no central boss remains at an end surface (Tm) of the remaining work that is held by a chuck of the lathe. This is because the end-cutting edge 415 of the insert 101 can be fed further.

Also in the case of cutting-off working on a pipe, burrs (hereinafter also referred to as "inward burrs") remain projecting toward an axis of the pipe from an inner periphery of an end surface of the cut-off piece. The inward burrs need to be removed later by another working step for the same reason as in the above-described case of cutting off the precision shaft from the work.

Further, with the conventional insert 101, since the bumps 420 for deforming the chip (K) are located close to the end-cutting edge 415, for instance, only 0.2-0.6 mm away from the end-cutting edge 415, the cutting feed speed varies the deforming effect. When the cutting feed speed is low, no deforming effect by the bumps is attained. For example, when the cutting feed speed is as low as 0.05 mm/rev or less, the sliced chip is thin and is not hot. Therefore, the chip is not fully pressed against (or rather does not collide with) the bumps, and hence no chip-deforming effect is expected. Even if the chip collides with the bumps 420, the bumps do not serve as breakers for breaking the chip into pieces. As a result, the discharged chip assumes a flat ribbon tape keeping its low rigidity. Even when the thin chip assumes a spiral shape by the bumps, there is a tendency for a continuous and unbreakable thin ribbon to discharge, resulting in problems such that the unbreakable thin ribbon is unstable in its discharge direction. This causes a scar on the piece end (T), or the ribbon is prone to twine around the work, etc.

On the other hand, where the cutting feed speed is as high as 0.2 mm/rev or more, the chip cut by the conventional insert is thick and strongly presses against the bumps of the insert, requiring a high chip-deforming force in order to stably render the chip breakable. As a result, the total pressure applied to the insert and the cutting resistance increases, thereby shortening the insert life. In addition, the conventional insert has another problem in that its feed speed range is narrow and the feed speed can not be widely varied.

The present invention has been made in view of the above problems of conventional cut-off inserts. It is therefore an object of the present invention to provide a cut-off insert having a low cutting resistance and a wide feed speed range, and an improved chip deforming effect including stabilization of the chip discharge direction.

The above objects have been achieved, in one of the aspect of the invention, by providing a cut-off insert used for making a groove in a work or cutting-off a piece from the work, characterized in that a recessed end-cutting edge is formed approximately in the center of an end-cutting edge ridge of the insert, and that a groove extending in a backward direction from the arc-shaped cutting edge is formed in the rake face. No bumps are formed in the rake face, and chip breaker wall is positioned far away from the end-cutting edge. The "backward" direction herein means a direction opposite a cutting-off feed direction, in other words, the direction moving away from the end-cutting edge.

When a circular rod, for example, is subjected to cutting-off working by using the cut-off insert of the invention, a chip ribbon corrugated in its width direction formed by the end-cutting edge ridge of the insert having the recessed cutting edge is discharged backwards from the end-cutting edge along the groove formed in the rake face. The corrugated chip runs straight backwards along the groove without being deformed or increasing its rigidity until colliding with the chip breaker wall. The chip shape is determined by the shape of the end-cutting edge. It is maintained and stabilized by the groove-formed rake face while being discharged backwards along the groove having the same cross sectional shape in a longitudinal direction of the groove. The corrugated chip is then pressed against the sloped chip-breakers including a sloped groove-breaker formed at the end of the groove. It is important to form the sloped chip-breakers at a position somewhat distant from the end-cutting edge, preferably at about 3-6 mm away from the end-cutting edge, according to another aspect of the invention. In other words, the length of the groove formed straightly in the rake face is extended at least 3 mm away from the arc-shaped cutting edge, and the sloped chip breakers start sloping at a position 3-6 mm away from the end-cutting edge. In this manner, the cutting resistance is greatly reduced. Also, the corrugated chips are smoothly discharged irrespective of the feed speed, thereby maintaining a stable chip-discharging direction. Especially when a deep and steep recess is required in the work, the stable chip-discharging direction attained by this invention is very effective in reducing the possibility of a chip hitting an inside wall that is being made in the recess, and in making a cut-off piece having unscarred ends.

Since the cutting resistance of the cut-off insert of the invention is also greatly reduced because there are no bumps in the rake face for deforming chips as in a conventional insert, a central burr or inward burrs generated in the end surface of the piece cut-off at the time of cutting-off working can be made very small. In addition, the end-cutting edge wears less and the life of the cut-off insert becomes longer, according to the invention.

It is important and preferable according to another aspect of the invention that the groove formed in the rake face has a depth of 0.05-0.2 mm. If the depth of the groove is smaller than 0.05 mm, the chip-shaping effect is small. If the depth of the groove is greater than 0.2 mm, the cutting resistance associated with the chip deformation does not lower and hence the tool life of the insert is not improved. In a preferred method of using this insert, the cutting feed is controlled so as not to exceed 0.2 mm. Where the groove is formed having a concave cross section, the concave shape is suitably an inverted arc, preferably an arc having a radius of 0.5-4 mm. The term "inverted arc" as used herein means a slope formed in symmetry inside the groove when the groove is cross-sectioned.

In another aspect of invention, the cut-off insert maintains a dimensional relationship of W/2 ≤ Wa ≤ 2W/3, where W is the width of the cut-off insert measured straightly across the end-cutting edge portion and Wa is the width of the groove formed in the rake face. The width (Wa) maintains the same value along the groove. In this range and manner, the chip-deforming effect by the sloped chip breakers formed back from the end-cutting edge is optimized, while maintaining sufficient strength of the cutting edge of the insert and a stable chip discharge direction.

Various cross-sectional shapes of the groove formed in the rake face can be made such as an arc, V-shape or flat-bottom, so long as an inverted arc is maintained along the groove as described above. Among these the arc shape is preferred, because it is additionally easy to manufacture.

Embodiments of the invention will now be described, by way of example only, with reference to the accompanying drawings, in which:
Fig. I is a perspective view and a main portion enlarged view of a cut-off insert according to a first embodiment of the invention.
Fig. 2 is a plan view of the main portion of the insert, as viewed from a rake face thereof corresponding to Fig. 1.
Fig. 3 is a main portion enlarged view, as viewed from a front clearance face (end-cutting face) of the cut-off insert of Fig. 1.
Fig. 4 is a sectional view taken along line A-A on the insert in Fig. 2, showing a sectional view of a groove formed in the insert.
Fig. 5 is a main portion enlarged side view of the cut-off insert of Fig. 1.
Fig. 6 is a main portion perspective view of a cut-off insert according to a second embodiment of the invention.
Fig. 7 is a view of the insert of Fig. 6 as viewed from a front clearance face (end-cutting face).
Fig. 8 is a sectional view of a groove formed in a rake face of the insert of Fig. 6.
Fig. 9 is a main portion perspective view of a cut-off insert according to a third embodiment of the invention.
Fig. 10 is a view of the insert of Fig. 9 as viewed from a front clearance face (end-cutting face).
Fig. 11 is a sectional view of a groove formed in a rake face of the insert of Fig. 9.
Fig. 12 is a main portion perspective view of a cut-off insert according to a fourth embodiment of the invention.
Fig. 13 is a main portion enlarged plan view of a conventional cut-off insert grooving or cutting-off a piece from a work turning on a lathe.

Reference numerals identify items in the drawings as follows:
1,21,31,41: Cut-off insert
12: Cutting-corner with an acute angle
13: Lateral back-tapered side
14: Base portion having a parallelogram shape
15: Straight end-cutting edge
15a: End-cutting edge ridge
16: Flat rake face
16a: Lateral back-tapered side edge
25,125,225,325: Recessed end-cutting edge
26,126,226,326,: Groove formed in a rake face
D: Depth of groove formed in a rake face
W: Width of total end-cutting edge (or maximum width between back-tapered sides)
Wa: Width of groove (or recessed end-cutting edge width)

### First Embodiment:

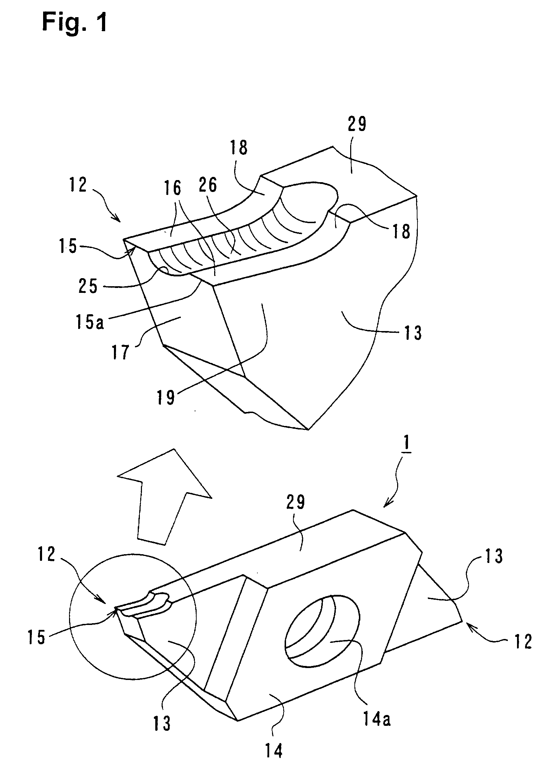

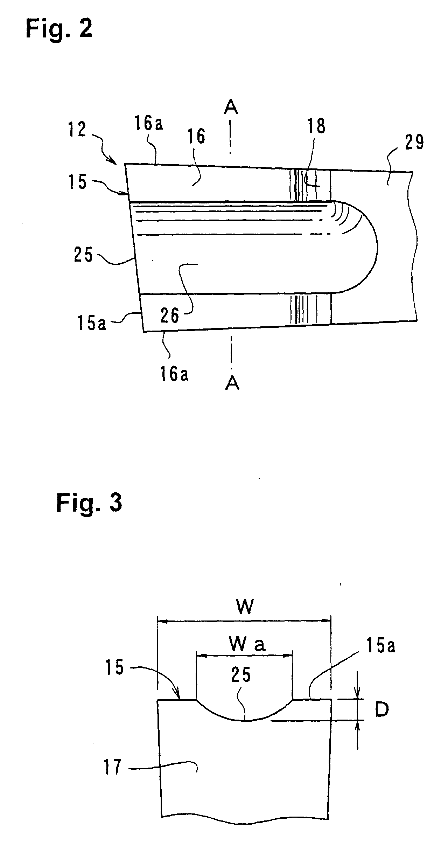

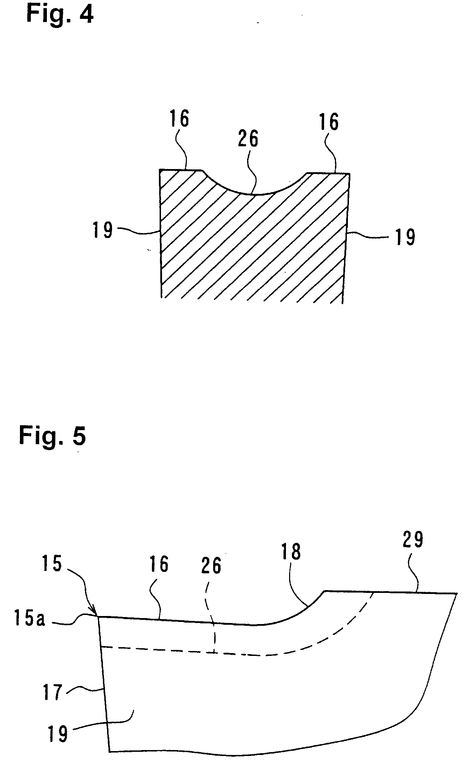

A first embodiment of the present invention is described in detail with reference to Figs. 1-5. Fig. 1 is a perspective view of a cut-off insert according to a first embodiment of the invention, with its main portion encircled and its enlarged view separately drawn as indicated by an arrow. Fig. 2 is a plan view of a rake face of the cut-off insert corresponding to the main portion of Fig. 1. Fig. 3 is an enlarged view of the cut-off insert, as viewed from the end-cutting face shown in Fig. 1. Fig. 4 is a sectional view taken along line A-A in Fig. 2. Fig. 5 is an enlarged side view of the main portion of the cut-off insert of Fig. 1. The cut-off insert 1 of this first embodiment can be made of a sintered body such as carbide alloy, ceramic or cermet. The cut-off insert 1 assumes a parallelogram shape when viewed from the side as shown in Fig 1. This cut-off insert 1 has two-corners 12 each having an end-cutting edge ridge 15a at its acute angled portions so that if one corner is worn the other can be used. In this embodiment, a triangular shaped portion 13 formed with the acute angled portion 12 is made thinner, and the other base portion 14 is made thicker so that the base portion can be fixed in an insert holder by utilizing a through hole 14a formed at the center of the base portion 14 for clamping the cut-off insert 1.

The straight end-cutting edge 15 has an acute angle formed by a flat rake face 16 and the end-cutting face 17 (herein also called as a flank face). Two flat rake faces 16 are formed extending from the end-cutting edge 15 in such manner that a lateral side 16a is tapered with a sweepback angle slightly narrowing the flat rake face 16 as the position moves further away from the end-cutting face 17 (i.e., as the position goes backward), as shown in Fig. 2. The rake face 16 inclines slightly downward by a positive angle of approximately 6° from the cutting edge 15a as the position moves back. A breaker wall 18 forming an arc surface as shown in Fig. 1 is formed at a rear position of the rake face 16 where the rake face is lowest in a downward direction. The flat end-cutting face 17 has a front clearance angle of approximately 6°. A side clearance face 19 (i.e., lateral back-tapered side face) has a side clearance angle of approximately 3°. The end-cutting edge 15 has a lead angle (θ) of approximately 5°, as may be recognized in Fig. 2.

A groove 26 is formed between and along the two flat rake faces 16, forming a grooved rake face as shown in Fig. 2. An arc-shaped end-cutting edge 25 having an arc ridge is formed by an end face of the groove 26 and the end-cutting face 17. The groove 26 forming the arc-shaped end-cutting edge 25 at the end-cutting face 17 extends straightly backward through two sloped breaker walls 18 made with a clamp face 29. The groove 26 has an inverted arc having an equal radius in its cross section maintaining about the same depth and shape along the groove 26 extending toward the sloped breaker walls 18. The groove 26 is cut further backwards from the rake face so as to form a grooved slope between the breaker walls 18 sloping up to the clamp face 29. The chip is discharged stably and smoothly following the groove 26 formed between the two sloped breaker walls 18, and is curled and/or broken by the sloped breaker walls 18.

In this particular embodiment, as shown in Fig. 3, a total width (W) of the end-cutting edge including the recessed edge 25 is about 1.8 mm and the width (Wa) of the arc shaped end-cutting edge 25 recessed from the straight end-cutting edge 15 is about 0.9 mm, respectively as measured straightly in a width direction of the insert. The arc radius (R) of the arc shaped end-cutting edge 25 is 1.5 mm and the depth (D) of thereof measured at the center is 0.15 mm. The groove 26 (of Fig. 1) that shapes the arc end-cutting edge 25 can be formed in a process of forming a sintered body into a general shape of the cut-off insert 1. Another method for forming the groove 26 may be by grinding the sintered body with a diamond whetstone whose outside circumferential surface has a shape corresponding to the shape of the groove 26.

Cutting-off a piece from a work such as a shaft body turning on a lathe is performed in the following manner by using the cut-off insert 1 of this embodiment. In the cutting-off working, a chip ribbon having a corrugation formed by the arc ridge formed between the straight end-cutting edge 15 slides out along the groove 26, deforming and increasing its rigidity and fragility. The deformation and breaking of the chip is effected not only by the shape of the groove 26 but also by the grooved breaker wall slopping from the rake face to the clamp face 29. The cutting resistance is best reduced if the breaker walls 18 slope from the position at a distance of 3-6 mm away from the end - cutting edge 15. Breaking of the chip into pieces is accelerated by rigidity-increased deformation that is caused by combination of the chip corrugated (or rather undulated chip) in the width direction of the chip and the sloped breakers 18 bending the corrugated chip in the thickness direction. The chip deforms irrespective of the feed speed, rendering a stable chip deforming effect. In other words, since the corrugated chip is made instantly at the arc end-cutting edge 25 at which position the temperature of the chip is highest and the chip slides some straight distance along the groove 26 while maintaining its shape and then deforms at the sloped breaker walls 18, the cutting resistance is quite reduced, compared to a conventional cut-off insert.

Therefore, when cutting-off is performed on a work of a metal shaft, a central boss or burr formable on the end surface of the work can be minimized or eliminated. When cutting-off is performed on a tube member, inward burrs can be minimized or eliminated.

Various cut-off insert samples were produced in which the arc radius of the groove 26 was fixed at 1.5 mm and the depth of the groove 26 was varied. Cutting-off working was performed on the work so as to check diameters and lengths of the boss (or burrs) formed on the cutting surfaces of pieces cut-off from the work using the insert samples. The cutting conditions were a spindle rotation speed of 2,000 rpm and a feed (f) of 0.03 mm/rev in dry cutting. The work was a metal shaft made of SUS303 having an outer diameter of 12 mm. The width (W) measured straightly between the lateral back-tapered edge 16a and along the end-cutting edges 15 including the arc end cutting edge width (Wa) was 1.8 mm, and the depth (D) of the groove was varied from 0 mm to 0.30 mm. The results are shown in Table 1. Numerical values in Table 1 are average values of ten (10) cutting-off attempts (the same also applies to the following other tables). A cut-off insert for comparison (shown as a comparative sample) was a conventional one in which the end-cutting edge was all straight, and no recess or groove was provided in the rake face. However, two bumps each having a partially spherical surface formed corresponding to a sphere having a diameter of 0.4 mm and a height of 0.5 mm were provided 0.4 mm respectively away from the end cutting edge and from the lateral back-tapered side.

**Table 1**

| Sample No. | Depth of groove (mm) | Diameter of central boss (mm) | Length of central boss (mm) | Chip deformation | Tool life |
|---|---|---|---|---|---|
| 1 * | 0 | 0.5 | 1.0 | None | Long |
| 2 | 0.05 | 0.1 | 0.2 | Good | Long |
| 3 | 0.15 | 0.05 | 0.05 | Good | Long |
| 4 | 0.2 | 0.1 | 0.2 | Good | Long |
| 5 | 0.25 | 0.4 | 0.7 | Good | Little short |
| 6 | 0.3 | 0.7 | 1.2 | Good | Short |

| | | | | | |
|---|---|---|---|---|---|
| Mark * denotes a comparative sample. | | | | | |

As shown in Table 1, in most of the cutting-off attempts by the cut-off inserts according to the embodiment of the invention, the diameter and length (height) of the central boss (burr) were smaller than in the comparative sample. This means that the cutting inserts of the embodiment can proceed closer to the central axis of the shaft without breaking off the piece from the work, compared to the cutting off working by the comparative sample, verifying that the cutting resistance is reduced by the present cutting insert. An excellent chip-deforming effect was obtained when the depth of the grove was at least 0.05 mm. On the other hand, the tool life was a little shorter when the depth of the groove exceeded 0.2 mm, due to increased resistance in chip deformation. The comparative sample showed no chip deformation, due to the slow feed speed.

Cutting-off tests were conducted by using the inserts of the above Sample Nos. 1-3, on a tubular work of 12 mm in outer diameter and 8 mm in inner diameter. Thickness and length of the inward burrs formed on the end surfaces of tubular pieces cut-off from the work were measured. The results are shown in Table 2.

**Table 2**

| Sample No. | Thickness of inward burr (mm) | Projection length of inward burr (mm) |
|---|---|---|
| 1* | 0.05 | 0.1 |
| 2 | 0.02 | 0.05 |
| 3 | 0.01 | 0.02 |

| | | |
|---|---|---|
| Mark * denotes a comparative sample. | | |

As shown in Table 2, the thickness and length of inward burrs formed by the insert samples of the present embodiment were smaller than those formed by the comparative insert sample. It is considered that the above results are obtained for the reason that the cutting resistance caused by the insert of the present embodiment is lower than that caused by the comparative sample.

Cutting-off tests were also conducted on the above-mentioned shaft work in which the groove width was constantly set at 0.15 mm and the arc radius (R) of the groove was varied in a range of 0.5-4.0 mm so as to vary the width (Wa) of the groove. The chip deforming effect and the tool life (determined on the strength of cutting edge corners) were measured. The width (W) of the end-cutting edge was set at a constant value of 1.8 mm. The results are shown in Table 3.

**Table 3**

| Sample No. | Width (Wa) of groove (mm) | Chip deformation (mm) | Tool life |
|---|---|---|---|
| 1 | 0.3 | Almost none | Long |
| 2 | 0.6 | A little | Long |
| 3 | 0.9 | Good | Long |
| 4 | 1.2 | Good | Long |
| 5 | 1.5 | Good | Short |

As shown in Table 3, in Sample Nos. 1 and 2 in which the groove width (Wa) was smaller than W/2, the chip deforming effect was insufficient. In the insert Sample No. 5 in which Wa was greater than 2W/3, the cutting edge was considerably worn, indicating a shorter tool life. These results show that there is a relation between the chip deforming effect and the tool life and there is a proper dimensional range with respect to the width (W) of the end-cutting edge and the width (Wa) of the groove in the rake face. The proper dimensional relationship is expressed as W/2 ≤ Wa ≤ 2W/3 for the cut-off insert embodied according to an aspect of the invention.

### Second Embodiment:

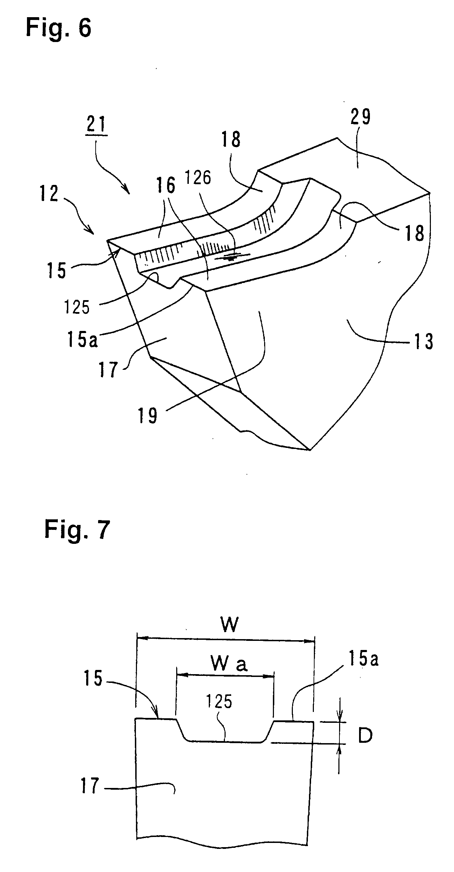

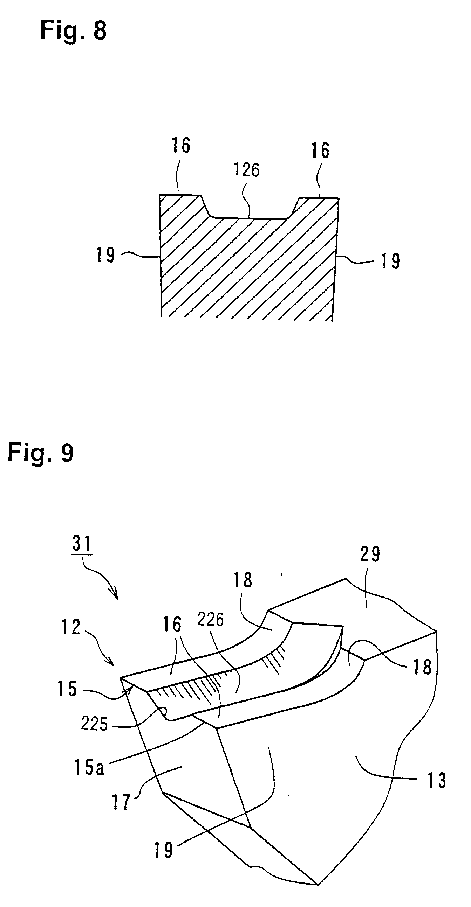

Next, a second embodiment according to another aspect of the invention is hereafter described with reference to Figs. 6-8 (wherein the same numerical symbols as those used in the previous drawings are used if not different). A cut-off insert 21 is different from the previously described insert 1 in that a flatly stepped down end-cutting edge 125 stepped down or notched from two end-cutting edges 15 and a bottom-flat groove 126 are formed between two flat-rake faces 16 running in parallel backwards from the stepped down end-cutting edge 125. The groove 126 may have a trapezoidal cross section as shown in Fig 8, different from the arc shaped groove 26 shown in Fig. 4.

### Third Embodiment:

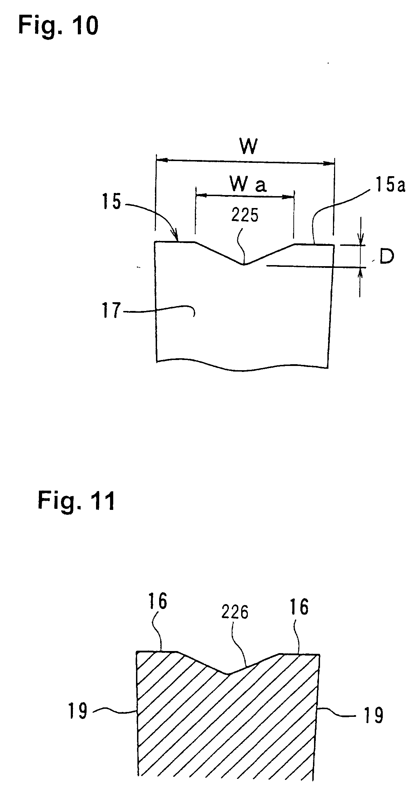

Next, a third embodiment according to yet another aspect of the invention is described with reference to Figs. 9-11 (using the same numerical symbols as those used in the previous drawings if not different). A cut-off insert 31 is different from the previously described insert in that a V-notched end-cutting edge 225 slanting down from two end-cutting edges 15 and a groove 226 with its V-shaped cross section are formed between two flat-rake faces 16 (as shown in Fig. 11) and extended backwards from the V-notched end-cutting edge 225.

The cut-off insert according to the invention is not limited to those exampled by the above embodiments, and may be varied or changed in design without departing from the spirit and scope of the invention. For example, although in the above embodiments the groove 26, 126, 226 extends backwards in its longitudinal direction toward the breaker wall 18, the groove 326 may be terminated halfway in the cutting face 16 in front of a breaker wall 418 as in the cut-off insert 41 shown in Fig. 12. Therein, a sloped breaker wall is made inside the groove and is positioned at least about 3 mm away from the end cutting edge 325.

Although the above embodiments are directed to a cut-off insert having two straight end-cutting edges and a single stepped down end-cutting edge such as an arc edge formed therebetween, the present invention can also be applied with a cut-off insert having a plurality of the stepped down end-cutting edges and the same number of grooves formed accordingly in the rake face. The present invention can also be applied to an insert for making a groove in the work. In such a groove-making insert, a wide width of the end-cutting edge requiring a low cutting resistance is necessary. Such a groove-forming insert with a plurality of the stepped down end-cutting edges and the same number of the grooves formed in the rake face, formed in the insert according to the present invention, reduces the cutting resistance and hence extends the insert life.

Major advantages attained by using the cutting insert of the invention for cutting-off and/or making a groove are a low cutting resistance, a stable chip-discharge direction, a wide range of feed speed and an easy chip-deforming and breaking, as understood by the foregoing description.

A further advantage is that since there are no bumps in the rake face and in the very vicinity of the end cutting edge, not only the cutting resistance is reduced but the perpendicular pressure applied to the work axis is minimized. As a result, the cutting edge wears less and a central boss or burr to be left on the cut-off piece end is minimized. The stable chip-discharge direction attained by the cutting-insert of the present invention is extremely important in making a smooth end surface of the piece cut-off. That is because if the chip-direction is unstable, the chip causes a scar or injury on an end surface of the work and/or the cut-off piece by the chip being discharged while the work is being grooved.

## Claims

1. A cut-off insert (1) used for cutting-off a piece from a work, comprising: an end-cutting face (17); at least two flat rake faces (16) running approximately in parallel and forming at least two straight end-cutting edges (15) with the end-cutting face (17); a recessed end-cutting edge (25) formed between the straight end-cutting edges (15); a sloped breaker wall (18) extended and sloping from the flat rake faces (16) to a clamp-pressing face (29) of the cut-off insert (1); and a recessed rake face having a groove (26) extending from the recessed end-cutting edge (25) toward a clamp-pressing face (29) and formed between the flat rake faces (16).

2. A cut-off insert (1) having a parallelogram-shaped base portion (14) forming two corners (12) with an acute angle, each corner comprising: an end-cutting face (17); at least two flat rake faces (16) running approximately in parallel and forming at least two straight end-cutting edges (15) with the end-cutting face (17); a recessed end-cutting edge (25) formed between the straight end-cutting edges (15); a sloped breaker wall (18) extended and sloping from the flat rake faces (16) to a clamp-pressing face (29) of the cut-off insert (1); and a recessed rake face having a groove (26) extending from the recessed end-cutting edge (25) toward a clamp-pressing face (29) and formed between the flat rake faces.

3. A cut-off insert according to claim 1 or 2, wherein the groove (26) forming a grooved rake face and formed between the flat rake faces (16) has a depth (D) in the range of from 0.05 to 0.2 mm.

4. A cut-off insert according to any one of claims 1 to 3, having a dimensional relationship of W/2 ≤ Wa ≤ 2W/3, wherein W is a maximum width measured between lateral tapered back sides (13) formed approximately in perpendicular to the flat rake faces (16) and Wa is a width of the groove (26) formed between the two rake faces (16).

5. A cut-off insert according to claim 4, wherein W is in the range of from 0.4 to 6 mm.

6. A cut-off insert according to any one of claims 1 to 5, wherein the groove (26) formed in the recessed-rake face has an arc-shaped cross section.

7. A cut-off insert according to any one of claims 1 to 6, wherein the groove (26) formed in the recessed-rake face extending from the end-cutting edge has a flat bottom.

8. A cut-off insert according to any one of claims 1 to 7, wherein the groove (26) formed in the recessed-rake face has a V-shaped cross section.

9. A cut-off insert according to claim 1, wherein the sloped breaker wall (18) is sloped from a position 3 to 6 mm away from the straight end cutting edge (15).

10. A cut-off insert according to any one of claims 1 to 9, wherein the sloped breaker wall (18) is positioned 3 to 6 mm away from the end-cutting edge (15).

11. A cut-off insert according to any one of claims 1 to 10, for forming a groove in a work made of metal.
